# EUROPÄISCHE PATENTSCHRIFT

(11) **EP 1 522 445 B1**
(45) Veröffentlichungstag und Bekanntmachung des Hinweises auf die Patenterteilung: **26.02.2014**
(21) Anmeldenummer: 04023758.8
(22) Anmeldetag: 06.10.2004
(51) Int. Cl.: B60J 10/00, B60J 10/08, B60J 10/04

(54) **Dichtungssystem für eine Kraftfahrzeugtür**
Sealing arrangement for a vehicle door
Joint d'étanchéité pour une porte de véhicule

(30) Priorität: 10.10.2003 DE 10347221
(43) Veröffentlichungstag der Anmeldung: 13.04.2005
(73) Patentinhaber: Bayerische Motoren Werke Aktiengesellschaft, 80809 München (DE)
(72) Erfinder: Zandt, Manfred, 85307 Entrischenbrunn (DE); Kramer, Thomas, 83043 Bad Aibling (DE)

(56) Entgegenhaltungen:
- EP-A1- 0 678 412
- WO-A-98/31557
- WO-A-03/070499
- WO-A-2004/030965
- DE-A1- 10 050 346
- GB-A- 2 353 553
- JP-A- 11 314 528
- US-A- 6 138 338

## Beschreibung

Die Erfindung betrifft eine Kraftfahrzeugtür gemäß dem Oberbegriff des Anspruchs 1.

Aus der EP-0678412 ist eine Kraftfahrzeugtür mit einer Dichtung bekannt. Die Kraftfahrzeugtür weist einen Fensterrahmen mit einem vorderen, einem oberen und einem hinteren Fensterrahmenabschnitt auf. In dem vorderen, dem oberen und dem hinteren Fensterrahmenabschnitt des Fensterrahmens ist die Dichtung angeordnet, die mit dem Fensterrahmen eine Führung für ein Fenster ausbildet. Der Fensterrahmen ist ein zweiteiliges Fensterrahmen-Profil. An einer Verbindungsstelle der beiden Fensterrahmen-Profile bilden die beiden Fensterrahmen-Profile einen Fensterrahmen-Flansch an dem die Dichtung angeordnet ist. Die Dichtung hat einen U-förmigen Querschnitt mit zwei Schenkeln. Ein dem Fenster zugewandter Schenkel der Dichtung liegt an dem Fensterrahmen-Flansch an. Ein dem Fenster abgewandter Schenkel der Dichtung ist zu dem Fensterrahmen-Flansch beabstandet und liegt mit einer Dichtlippe an dem Fensterrahmen-Flansch an.

Aus der WO-98/31557 ist eine Kraftfahrzeugtür mit einem Dichtungssystem bekannt. Bei diesem Dichtungssystem ist gegenüberliegend zu einem Eckbereich eines Fensterrahmens am Dichtungssystem ein Dichtungsabschnitt einstückig ausgebildet.

Aus der WO-03/070499 ist eine Kraftfahrzeugtür mit einem Dichtungssystem bekannt. Der Fensterrahmen weist einen oberen, in etwa waagrechten Fensterrahmenabschnitt und einen in etwa senkrechten hinteren Fensterrahmenabschnitt auf, der als hintere Fensterführung dient. Zwischen dem waagrechten Fensterrahmenabschnitt und dem senkrechten Fensterrahmenabschnitt ist ein Eckbereich mit einem Flansch ausgebildet, der einen bogenförmigen Außenrand aufweist. Das bekannte Dichtungssystem weist eine U-förmige Lippe mit einem Zwischenraum auf, in den ein Rand des Fensterrahmens aus optischen Gründen gesteckt ist.

Aus der EP 0 712 749 A1 ist bereits ein Dichtungssystem für eine Kraftfahrzeugtür bekannt, das an einem Fensterrahmen angeordnet ist. Das bekannte Dichtungssystem dichtet über Dichtlippen gegenüber einer karosserieseitigen Türausschnittsöffnung ab. Ferner sind Dichtlippen zur Führung und Abdichtung einer verschiebbaren Fensterscheibe vorgesehen. Das vorbekannte Dichtungssystem weist an einem Klemmbereich zwei hintereinander ausgebildete Lippen auf, wobei der Klemmbereich zur Positionierung des Dichtungssystems an dem Fensterrahmen dient.

Ferner ist es bekannt, dass ein an einem Türkörper ausgebildeter Fensterrahmen eine Ecke aufweist, die zwischen einem im Wesentlichen in vertikaler Richtung sich erstreckenden Abschnitt des Rahmens und einem im Wesentlichen schräg verlaufenden Abschnitt des Fensterrahmens ausgebildet ist. Zur Vermeidung einer Schweißnaht und um den Fensterrahmen aus einem einteiligen äußeren und einteiligen inneren Formteil herstellen zu können, ist dieser Eckbereich mit einem bogenförmigen Flansch versehen.

Zur Abdichtung gegen Schall, der aus dem Türkörper in den Fensterrahmen übertragen wird, ist es bekannt, zwischen dem bogenförmigen Flansch des Fensterrahmens und einem Dichtungssystem, wie es beispielsweise aus der oben beschriebenen EP 0 712 749 A1 bekannt ist, ein separates Schaumteil zwischen dem Dichtungssystem und dem Türrohbau anzuordnen. Dies hat jedoch die Nachteile, dass bei der Montage ein weiterer Schritt erforderlich ist und dass ein falscher Einbau des Schaumteils möglich ist.

Aufgabe der Erfindung ist es, eine Kraftfahrzeugtür zu schaffen, die einen einfachen Aufbau aufweist und bei der eine Geräuschbildung vermieden wird.

Diese Aufgabe wird durch die Merkmale des Anspruchs 1 gelöst.

Bei einer erfindungsgemäßen Kraftfahrzeugtür weist das Dichtungssystem bereits einen zusätzliche Dichtungsabschnitt auf, der dem hinteren Eckbereich des Fensterrahmens gegenüberliegt und den dort ausgebildeten Eckflansch des Fensterrahmens überdeckt. Der zusätzliche Dichtungsabschnitt ist einstückig an dem Dichtungssystem angeformt, so dass die Verwendung eines separaten Schaumteils und dessen separate Montage entfallen können.

In einer vorteilhaften Ausführungsform verläuft eine an dem Dichtungssystem ausgebildete erfindungsgemäße Dichtlippe von einem Anfangspunkt in Höhe einer vorderen Fensterführung bis zu einem unteren Ende einer hinteren Fensterführung, die an einem in etwa vertikal verlaufenden Abschnittes des Fensterrahmens ausgebildet ist. Diese erfindungsgemäße Dichtlippe dient auch zur Abschottung und Abdichtung von Schall, der im Türkörper entsteht.

In einer vorteilhaften Ausführungsform erstreckt sich das Dichtungssystem mit der genannten Dichtlippe bis in eine im Türkörper ausgebildete Öffnung eines Türhohlraumes. Die in den Türkörper ragende Länge der Dichtlippe beträgt ca. 5 bis 20 mm, wobei die Länge der in den Türkörper ragenden Dichtlippe von einer Oberkante der Türhohlraumöffnung aus gemessen ist.

Eine Ausführungsform der Erfindung wird nachstehend anhand der Zeichnungen beispielshalber beschrieben. Dabei zeigen:
- Fig. 1: eine schematische Seitenansicht einer teilweise dargestellten Seitenwand eines Kraftfahrzeuges,
- Fig. 2: eine Seitenansicht eines einteiligen äußeren Fensterrahmenteils, mit einem Flansch in einer oberen Ecke des Fensterrahmens,
- Fig. 3: eine Schnittdarstellung längs einer Linie I-I in der Fig. 1, die einen Querschnitt zwischen einer Türausschnittsöffnung im Dachbereich und einer Tür im geschlossenen Zustand zeigt,
- Fig. 4: eine Seitenansicht des Dichtungssystems mit einem Dichtungsabschnitt, der einstückig an dem Dichtungssystem ausgebildet ist und der den mit einem Flansch versehenen Eckbereich des Fensterrahmens überdeckt,
- Fig. 5: eine Schnittdarstellung eines Schnittes längs der Linie II-II in der Fig. 1, aus der der dort vorhandene Dichtungsabschnitt des Dichtungssystems zur Abdeckung des Flanschbereiches des Fensterrahmens hervorgeht.

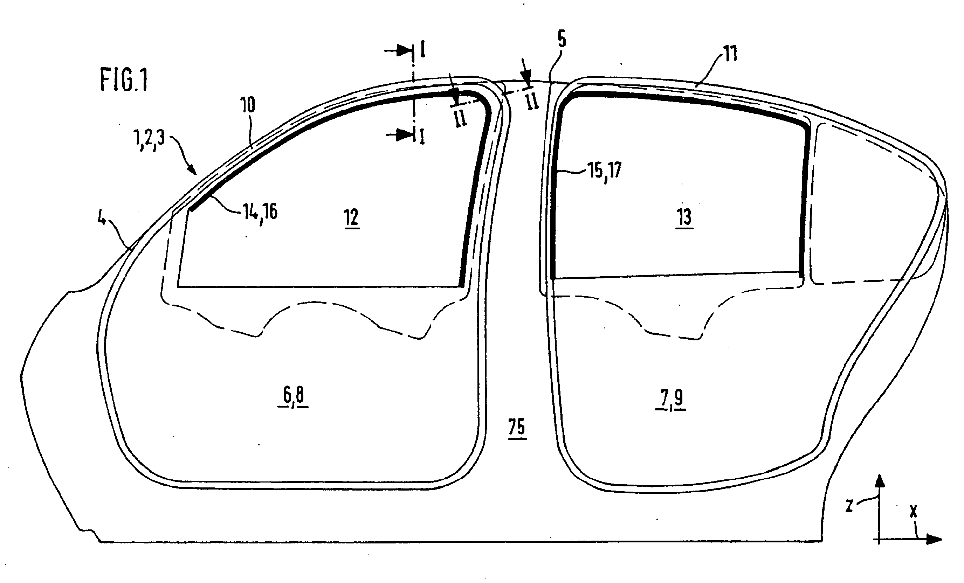

Die Fig. 1 zeigt eine teilweise dargestellte Seitenwand 3 einer Karosserie 2 eines nicht weiter dargestellten Kraftfahrzeuges 1. In der Seitenwand 3 sind zwei Türausschnittsöffnungen 4 und 5 ausgebildet, in denen jeweils eine vordere und eine hintere Tür 6 und 7 schwenkbar angeordnet sind. Die Türen 6 und 7 weisen jeweils einen Türkörper 8, 9 sowie einen Fensterrahmen 10, 11 auf.

Über ein nicht dargestelltes Führungssystem ist in dem jeweiligen Fensterrahmen 10, 11 eine Fensterscheibe 12, 13 über ein nicht gezeigtes Betätigungssystem verschiebbar. In der Fig. 1 ist in jeweils einer dick eingezeichneten Linie der Verlauf jeweils einer Dichtlippe 16, 17 eines nicht weiter dargestellten Dichtungssystems 14, 15 dargestellt, das gegenüber der Karosserie 2 und gegenüber der jeweiligen Fensterscheibe 12, 13 sowie gegenüber dem jeweiligen Fensterrahmen 10, 11 abdichtet.

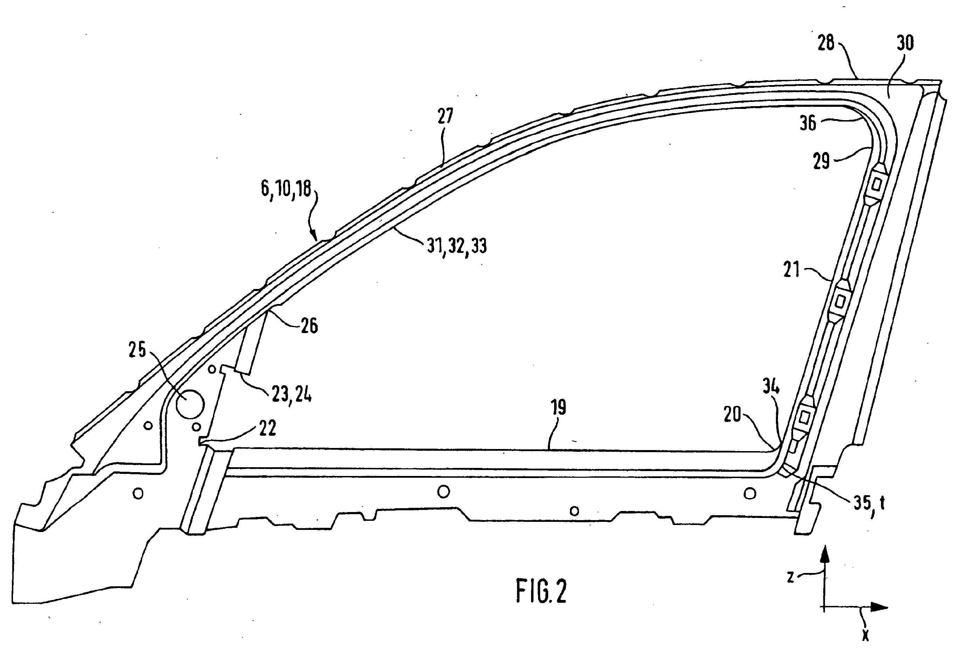

Die Fig. 2 zeigt ein äußeres Schließbauteil 18 des Fensterrahmens 10 der vorderen Tür 6. Das Schließbauteil 18 weist einen unteren, waagrechten, in x-Richtung verlaufenden Abschnitt 19 auf, der einen äußeren Rand einer nicht dargestellten Öffnung eines Hohlraumes des Türkörpers 8 bildet. Ein in etwa geradlinig, in vertikaler Richtung verlaufender Abschnitt 21 des Schließbauteils 18 erstreckt sich von einem hinteren Ende 20 des waagrechten Abschnittes 19 nach oben in z-Richtung. An einem vorderen Ende 22 des waagrechten Abschnittes 19 des Schließbauteils 18 schließt sich ebenfalls ein in etwa vertikaler Richtung verlaufender, mit einer Stufe 23 versehener Abschnitt 24 in Höhe eines Befestigungsbereiches 25 für einen Türaußenspiegel an.

Ein schräg nach oben verlaufender Abschnitt 27 ist an einem oberen Ende 26 des vorderen Abschnittes 24 angeordnet, wobei das obere, hintere Ende 28 des Abschnittes 27 mit einem oberen Ende 29 des hinteren, vertikalen Abschnittes 21 an einem dreieckförmigen Flanschbereich oder Eckbereich 30 verbunden ist. Der dreieckförmige Flanschbereich 30 weist an einem Innenrand 31 des Fensterrahmens 10 einen bogenförmigen Abschnitt 36 auf.

Aus der Fig. 2 ist ersichtlich, dass an dem Innenrand 31 des Fensterrahmens 10 eine Vertiefung 32 mit einem Flansch 33 ausgebildet ist, der in der gezeigten Ausführungsform am oberen Ende 26 des vorderen Abschnittes 24 beginnt und unterhalb des hinteren Endes 20 des waagrechten Abschnittes 19 oder eines unteren Endes 34 des hinteren vertikalen Abschnittes 21 an einer Stelle 35 endet, die um einen Abstand t vom Innenrand 31 beabstandet ist. In einer Ausführungsform beträgt der Abstand t = ca. 5 bis 20 mm und entspricht der Verlängerung des vertikalen Abschnittes 21 des Fensterrahmens 10 in den Hohlraum des Türkörpers 8.

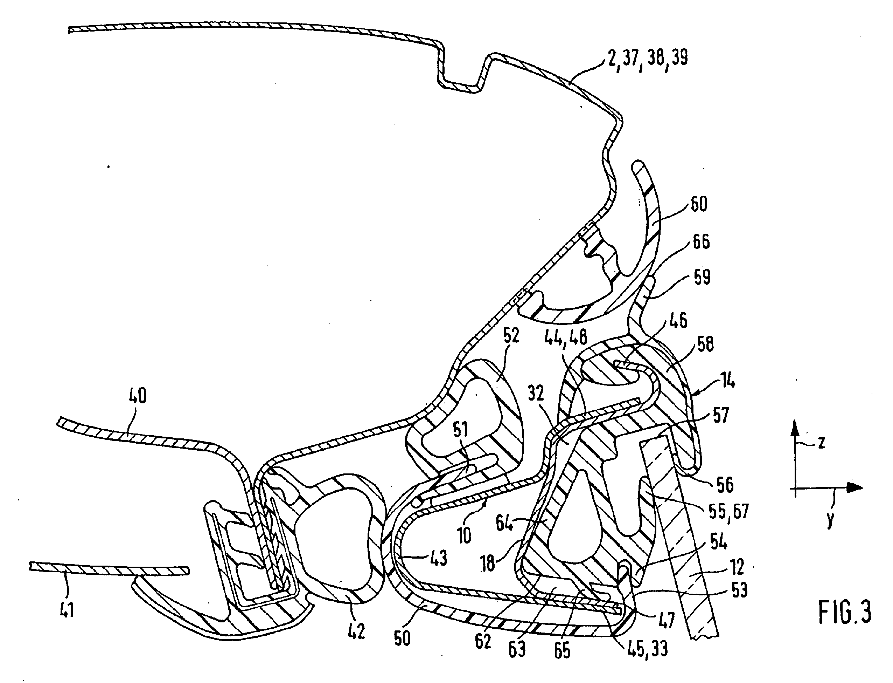

Die Fig. 3 zeigt eine Schnittdarstellung eines Abschnittes 37 eines Dachbereiches 38 der Karosserie 2. An ein Außenteil 39 des Dachbereiches 38 schließt sich ein Innenteil 40 an. Unterhalb des Innenteils 40 ist ein Dachhimmel 41 über eine Dichtung 42 befestigt. Im Schnitt ist das Schließbauteil 18 sowie ein Fensterrahmeninnenteil 43 des Fensterrahmens 10 erkennbar.

An den in der Fig. 3 gezeigten Enden 44, 45 des Fensterrahmeninnenteils 43 und den Enden 46, 47 des Fensterrahmenschließbauteils 18 ist jeweils ein Verbindungsflansch 48, 33 ausgebildet. Der untere Verbindungsflansch 33 und das Fensterrahmeninnenteil 43 sind von einer Abdeckung 50 umgeben, die beispielsweise aus Kunststoff hergestellt ist. Ein karosserieseitiges Ende 51 der Abdeckung 50 wird durch eine Dichtung 52 gehaltert. Ein der Fensterscheibe 12 zugewandtes Ende 53 der Abdeckung 50 ist durch einen entsprechenden Abschnitt 54 des Dichtungssystems 14 in abdichtender Weise befestigt.

Ferner sind in der Fig. 3 gegenüberliegende Dichtlippen 55, 56 des Dichtungssystems 14 erkennbar, die ein oberes Ende 57 der Fensterscheibe 12 abdichtend führen. Der obere Verbindungsflansch 48 des Fensterrahmens 10 ist ebenfalls von einem Dichtungsabschnitt 58 umgeben. An dem Dichtungsabschnitt 58 ist eine Dichtlippe 59 ausgebildet, die im geschlossenen Zustand der Tür 6 an einer Zierleiste 60 des Dachbereiches 38 anliegt.

Zwischen dem unteren Verbindungsflansch 33 und dem oberen Verbindungsflansch 48 ist die Vertiefung 32 ausgebildet. Eine Außenfläche 62 des Dichtungssystems 14 ist von dem dazu gegenüberliegenden Verbindungsflansch 33 durch einen Spalt 63 beabstandet. Der Spalt 63 ist durch eine einstückig an einem Dichtungskörper 64 des Dichtungssystems 14 ausgebildete Dichtlippe 65 abgedichtet. Die Abdichtung erfolgt auch gegen Schall, der im Hohlraum des Türkörpers 8 entsteht.

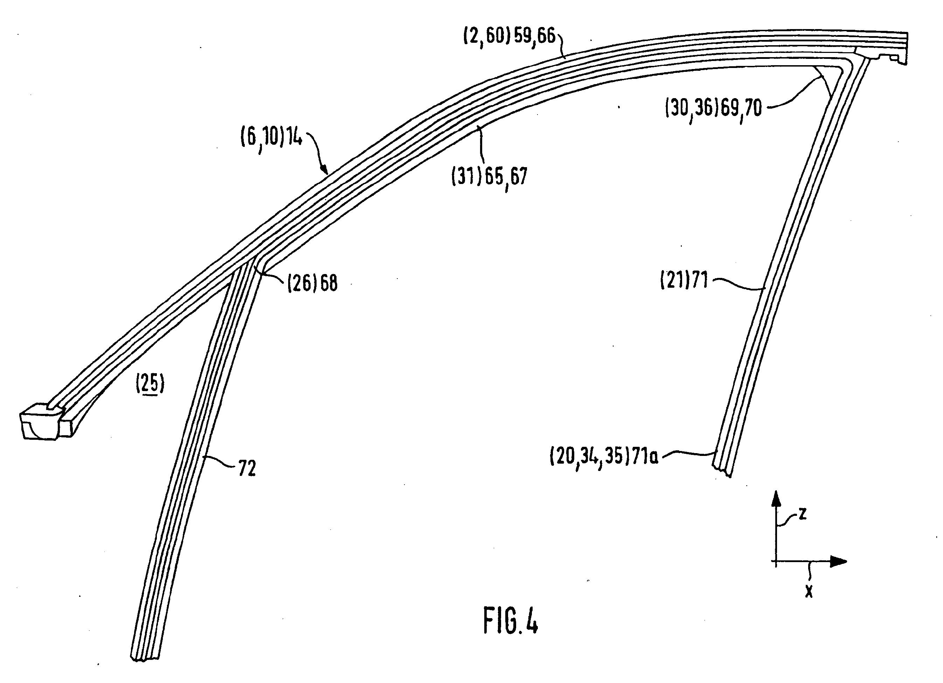

Die Fig. 4 zeigt ein Dichtungssystem 14 für den Fensterrahmen 10 der vorderen Tür 6. Die in der Fig. 4 in Klammern eingetragenen Bezugszeichen betreffen die entsprechenden, gegenüberliegenden Stellen des Fensterrahmens 10, an dem das Dichtungssystem 14 befestigt ist.

Das Dichtungssystem 14 weist an einem oberen Außenrand 66 die Dichtlippe 59 zur Abdichtung gegenüber der Karosserie 2 bzw. der Zierleiste 60 auf. Dazu gegenüberliegend ist ein Innenrand 67 mit einer Dichtlippe 65 ausgebildet, wobei ein Ende 68 der Dichtlippe 65 gegenüber dem oberen Ende 26 am Befestigungsbereich 25 für den Fahrzeugaußenspiegel liegt und das andere Ende 71a der Dichtlippe 65 sich am unteren Ende 34 des vertikalen Abschnittes 21 des Fensterrahmens 10 befindet. Die Dichtlippe 65 liegt im montierten Zustand an dem Verbindungsflansch 33 des Schließbleches 18 an.

Gegenüber dem Eckbereich 30 des Schließbleches 18 mit dem bogenförmigen Innenrand 31 weist die Dichtlippe 65 ebenfalls einen bogenförmigen Verlauf auf. Zur Anpassung an den bogenförmigen Verlauf 36 des Schließbauteils 18 und den dreieckförmigen Flanschbereich oder Eckbereich 30 ist das Dichtungssystem 14 in diesem Bereich 69 mit einem in der Draufsicht in etwa dreieckförmigen Zusatzabschnitt 70 versehen, der einstückig an dem Dichtungssystem 14 integriert ist.

Die Dichtlippe 65 verläuft anschließend bis mindestens zu dem unteren Ende 34 des dazu gegenüberliegenden vertikalen Abschnittes 21 des Fensterrahmens 10. In einer anderen Ausführungsform kann sich das Ende 71a der Dichtlippe 65 bis zu einer Stelle 35 erstrecken, die in dem im Türkörper 6 ausgebildeten Hohlraum zur Aufnahme der Fensterscheibe 12 liegt.

Aus der Fig. 4 ist ferner ein sich im Wesentlichen in senkrechter Richtung erstreckender Abschnitt 72 ersichtlich, der eine nicht dargestellte vordere Fensterführung bzw. den senkrechten Abschnitt 24 des Fensterrahmens 10 überdeckt.

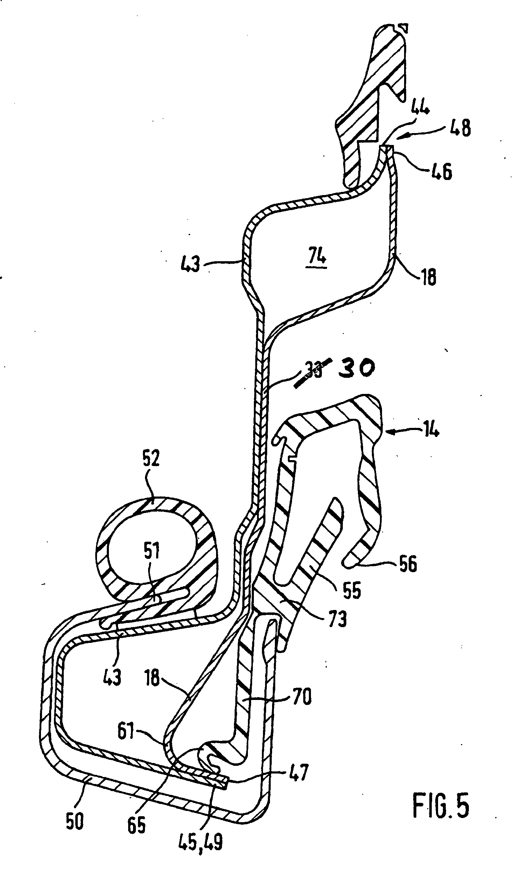

Die Fig. 5 zeigt eine Schnittdarstellung längs der Linie II-II in der Fig. 1, wobei nicht alle Bauteile dargestellt sind. Im Unterschied zu der Fig. 3 ist an dem gegenüber dem vertikalen Abschnitt 21 des Schließbauteils 18 verlaufenden Dichtungsabschnitt 71 für die hintere Fensterführung keine Dichtlippe 59 mehr erforderlich.

Aus der Fig. 5 ist ersichtlich, dass der Zusatzabschnitt 70 die Dichtlippe 65 mit einem Abschnitt 73 des Dichtungssystems 14 verbindet. Die Größe und Form des Zusatzabschnittes 70 ist so ausgelegt, dass der Zusatzabschnitt 70 den gegenüberliegenden dreieckförmigen Abschnitt 30 des Schließbauteils 18 überdeckt. Ferner ist aus der Fig. 5 ersichtlich, dass das Schließbauteil 18 und das Fensterrahmeninnenteil 43 ein zweites Profil 74 bilden, das gegenüber einer B-Säule 75 der Karosserie 2 im geschlossenen Zustand der Tür 6 angeordnet ist.

## Patentansprüche

1. Kraftfahrzeugtür (6, 7) mit einem Türkörper (8, 9) und einem Fensterrahmen (10, 11), mit einem Dichtungssystem (14, 15), das an dem Fensterrahmen (10, 11) derKraftfahrzeugtür (6, 7) angeordnet ist und Dichtvorrichtungen aufweist, die zum Abdichten und Führen einer verschiebbaren Fensterscheibe (12, 13) vorgesehen sind, wobei der Fensterrahmen (10, 11) einen vorderen, vertikal verlaufenden Fensterrahmenabschnitt (24), einen oberen horizontal oder schräg nach oben verlaufenden Fensterrahmenabschnitt (27) und einen hinteren vertikal verlaufenden Fensterrahmenabschnitt (21) aufweist, wobei zwischen dem oberen Fensterrahmenabschnitt (27) und dem hinteren Fensterrahmenabschnitt (21) ein Eckbereich (30) ausgebitdet ist, wobei der Fensterrahmen (10, 11) ein zweiteiliges Fensterrahmen-Profil (18, 43) ist, wobei das zweiteilige Fensterrahmen-Profil (18, 43) ein äußeres Fensterrahmen-Schließbauteil (18) und ein Fensterrahmen-Innenteil (43) aufweist, wobei an einer Verbindungsstelle zweier Enden (45, 47) des äußeren Fensterrahmen-Schließbauteils (18) und des Fensterrahmen-Innenteils (43) die beiden Enden (45, 47) dieser beiden Fensterrahmen-Profile (18, 43) einen unteren Fensterrahmen-Verbindungsflansch (33) bilden, wobei an diesem unteren Fensterrahmen-Verbindungsflansch (33) eine einstückig mit dem Dichtungssystem (14, 15) ausgebildete Dichtlippe (65) an dem außeren Fensterrahmen-Schließbauteil (18) des Fensterrahmen-Verbindungsflansches (33) unter Vorspannung anliegt,
**dadurch gekennzeichnet, dass** der Fensterrahmen- Verbindungsflansch (33) und das Fensterrahmen-Innenteil (43) von einer Abdeckung (50) umgeben sind, dass ein karosserieseitiges Ende (51) der Abdeckung (50) durch eine Dichtung (52) gehaltert ist, und dass ein der Fensterscheibe (12, 13) zugewandtes Ende (53) der Abdeckung (50) durch einen entsprechenden Abschnitt (54) des Dichtungssystems (14, 15) in abdichtender Weise befestigt ist.

2. Kraftfahrzeugtür nach Anspruch 1
**dadurch gekennzeichnet, dass** die einstückig ausgebildete Dichtlippe (65) des Dichtungssystems (14, 15) zumindest gegenüberliegend von einem oberen Ende (26) einer vorderen Fensterführung (24) bis zu einem unteren Ende (34, 35) einer hinteren Fensterführung (21) ausgebildet ist.

3. Kraftfahrzeugtür nach den Ansprüchen 1 oder 2,
**dadurch gekennzeichnet, dass** sich das Dichtungssystems (14, 15) mit der einstückig mit dem Dichtungssystem (14, 15) ausgebildeten Dichtlippe (65) bis in eine Öffnung eines Hohlraumes des Türkörpers (8, 9) der betreffenden Tür (6, 7) erstreckt, in der die Fensterscheibe (12, 13) geführt ist.

4. Kraftfahrzeugtür nach einem der vorhergehenden Ansprüche, **dadurch gekennzeichnet, dass** das Dichtungssystem (14) an einem oberen Außenrand (66) eine Dichtlippe (59) zur Abdichtung gegenüber einer Karosserie (2) bzw. einer Zierleiste (60) eines Kraftfahrzeuges (1) aufweist, dass dazu gegenüberliegend ein Innenrand (67) mit der einstückig mit dem Dichtungssystem (14, 15) ausgebildeten Dichtlippe (65) ausgebildet ist, dass ein Ende (68) der einstückig mit dem Dichtungssystem (14, 15) ausgebildeten Dichtlippe (65) gegenüber einem oberen Ende (26) des Abschnittes (24) einer vorderen Fensterführung an einem Befestigungsbereich (25) für einen Fahrzeugaußenspiegel einer vorderen Tür (6) liegt und dass das andere Ende (71a) der einstückig mit dem Dichtungssystem (14, 15) ausgebildeten Dichtlippe (65) sich an einem unteren Ende (34) des hinteren, vertikalen Fensterrahmen abschnittes (21) befindet.

5. Kraftfahrzeugtür nach Anspruch 4, **dadurch gekennzeichnet, dass** die einstückig mit dem Dichtungssystem (14, 15) ausgebildete Dichtlippe (65) kontinuierlich an dem Innenrand (67) des Dichtungssystems (14, 15) von dem Ende (68) der einstückig mit dem Dichtungssystem (14, 15) ausgebildeten Dichtlippe (65) über den Rand eines flächigen Dichtungsabschnittes (70), der einen verbreiterten Eckbereich (30) des äußeren Fensterrahmen-Schließbauteils 18) überdeckt, bis zum anderen Ende (71a) der einstückig mit dem Dichtungssystem (14, 15) ausgebildeten Dichtlippe (65) verläuft.

6. Kraftfahrzeugtür nach einem der vorhergehenden Ansprüche, **dadurch gekennzeichnet dass** die einstückig mit dem Dichtungssystem (14, 15) ausgebildete Dichtlippe (65) gegenüber dem Eckbereich (30) des äußeren Fensterrahmen-Schließbauteils (18) mit seinem bogenförmigen Innenrand (36) ebenfalls einen bogenförmigen Verlauf aufweist, dass zur Anpassung an den bogenförmigen Verlauf (36) des äußeren Fensterrahmen-Schließbauteils (18) und den bogenförmigen Innenrand des Ekbereichs (30) das Dichtungssystem (14) in diesem Bereich (69) mit einem in der Draufsicht in etwa dreieckförmigen Zusatzabschnitt (70) versehen ist, der einstückig an dem Dichtungssystem (14) integriert ist.

7. Kraftfahrzeugtür nach einem der Ansprüche 4-5, **dadurch gekennzeichnet, dass** ein Verlauf des Innenrandes (67) des Dichtungssystems (14, 15) dem Verlauf eines Innenrandes (31) des Fensterrahmen-Schließbauteils (18) entspricht.

## Claims

1. A motor-vehicle door (6, 7) having a door body (8, 9) and a window frame (10, 11) with a sealing system (14, 15) disposed on the window frame (10, 11) of the vehicle door (6, 7) and sealing devices for sealing and guiding a movable window-pane (12, 13), wherein the window frame (10, 11) has a front vertical portion (24), a top horizontal or upwardly sloping portion (27) and a rear vertical portion (21), wherein a corner region (30) is formed between the top portion (27) and the rear portion (21), wherein the frame (10, 11) is a two-part profile (18, 43), wherein the two-part profile (18, 43) has an outer frame-closing part (18) and an inner part (43), wherein, at a place where two ends (45, 47) of the outer part (18) and the inner part (43) are connected, the two ends (45, 47) of the said two profiles (18, 43) have a bottom connecting flange (33), wherein a sealing lip (65) integrally formed with the sealing system (14, 15) abuts the outer part (18) of the connecting flange (33) under prestress,
**characterised in that** the flange (33) and the inner part (43) are surrounded by a cover (50), a body-side end (51) of the cover (50) is held by a seal (52), and an end (53) of the cover (50) facing the window pane (12, 13) is fastened in sealing-tight manner by a corresponding portion (54) of the sealing system (14, 15).

2. A motor-vehicle door according to claim 1, **characterised in that** the integrally formed sealing lip (65) on the sealing system (14, 15) extends at least opposite and from a top end (26) of a front window guide (24) to a bottom end (34, 35) of a rear window guide (21).

3. A motor-vehicle door according to claim 1 or claim 2, **characterised in that** the sealing system (14, 15), via the lip (65) integrally formed with the sealing system (14, 15), extends into an opening in a cavity in the body (8, 9) of that door (6, 7) in which the window pane (12, 13) is guided.

4. A motor-vehicle door according to any of the preceding claims, **characterised in that** a top outer edge (66) of the sealing system (14) has a lip (59) for sealing against a car body (2) or an ornamental strip (60) on a motor vehicle (1), and opposite thereto an inner edge (67) is formed with the sealing lip (65) integrally formed with the sealing system (14, 15), and an end (68) of the lip (65) integrally formed with the sealing system (14, 15) lies opposite a top end (26) of the portion (24) of a front window guide at a fastening region (25) for an outer mirror on a front door (6) and the bottom end (71 a) of the sealing lip (65) integrally formed with the sealing system (14, 15) is at a bottom end (34) of the rear vertical window-frame portion (21).

5. A motor-vehicle door according to claim 4, **characterised in that** the sealing lip integrally formed with the sealing system (14, 15) extends continuously on the inner edge (67) of the sealing system (14, 15) from the end (68) of the sealing lip (65) integrally formed with the sealing system (14, 15) over the edge of a flat seal portion (70) which covers a wide corner region (30) of the outer window-frame closing part (18) up to the other end (71a) of the sealing lip (65) integrally formed with the sealing system (14, 15).

6. A motor-vehicle door according to any of the preceding claims, **characterised in that** the sealing lip (65) integrally formed with the sealing system (14, 15), opposite the corner region (30) of the outer window-frame closing component (18) having an arcuate inner edge (36), likewise has an arcuate shape, and in order to adapt to the arcuate shape (36) of the outer window-frame closing component (18) and the arcuate inner edge of the corner region (30) the sealing system (14) in this region (69) is provided with an additional portion (70) approximately triangular in plan view and integrally incorporated with the sealing system (14).

7. A motor-vehicle door according to claim 4 or claim 5, **characterised in that** a shape of the inner edge (67) of the sealing system (14, 15) corresponds to the shape of an inner edge (31) of the window-frame closing component (18).

## Revendications

1. Porte de véhicule (6, 7) comportant un corps de porte (8, 9) et un cadre de fenêtre (10, 11) équipé d'un système d'étanchéité (14, 15) qui est monté sur le cadre de fenêtre (10,11) de la porte du véhicule (6, 7) et comporte des dispositifs d'étanchéité qui sont prévus pour assurer l'étanchéité et le guidage d'une vitre coulissante (12, 13), le cadre de fenêtre (10, 11) comportant un tronçon de cadre de fenêtre avant s'étendant verticalement (24), un tronçon de cadre de fenêtre supérieur (27) s'étendant horizontalement ou obliquement vers le haut, et un tronçon de cadre de fenêtre arrière (21) s'étendant verticalement, une zone angulaire (30) étant formée entre le tronçon de cadre de fenêtre supérieur (27) et le tronçon de cadre de fenêtre arrière (21), le cadre de fenêtre (10, 11) étant un profilé de cadre de fenêtre (18, 43) en deux parties, ce profilé de cadre de fenêtre en deux parties (18, 43) comportant un élément de fermeture du cadre de fenêtre externe (18) et une partie interne de cadre de fenêtre (43), au niveau d'un point de jonction de deux extrémités (45, 47) de l'élément de fermeture externe (18) du cadre de fenêtre et de la partie interne du cadre de fenêtre (43) les deux extrémités (45, 47) de ces deux profilés de cadre de fenêtre (18, 43) formant une bride de liaison du cadre de fenêtre inférieure (33), et sur cette bride de liaison du cadre de fenêtre inférieure (33) s'appliquant sous précontrainte contre l'élément de fermeture du cadre de fenêtre externe (18) de la bride de liaison du cadre de fenêtre (33), une lèvre d'étanchéité (65) réalisée en une seule pièce avec le système d'étanchéité (14, 15),
**caractérisée en ce que**
la bride de liaison du cadre de fenêtre (33) et la partie interne du cadre de fenêtre (43) sont entourés par un élément de recouvrement (50), l'extrémité (51) située côté carrosserie de cet élément de recouvrement (50) est maintenue par un joint d'étanchéité (52), et l'extrémité (53) tournée vers la vitre (12, 13) de l'élément de recouvrement (50) est fixée en assurant l'étanchéité par un tronçon correspondant (54) du système d'étanchéité (14, 15).

2. Porte de véhicule conforme à la revendication 1,
**caractérisée en ce que**
la lèvre d'étanchéité (65) réalisée en une seule pièce du système d'étanchéité (14, 15) est réalisée au moins de manière opposée de l'extrémité supérieure (26) d'un élément de guidage avant (24) de fenêtre jusqu'à l'extrémité inférieure (34, 35) d'un élément de guidage arrière (21) de fenêtre.

3. Porte de véhicule conforme à la revendication 1 ou 2,
**caractérisée en ce que**
le système d'étanchéité (14, 15) s'étend, avec la lèvre d'étanchéité (65) réalisée en une seule pièce avec ce système d'étanchéité (14, 15) jusque dans une ouverture d'un volume creux du corps de porte (8, 9) de la porte (6, 7) dans lequel est guidée la vitre (12, 13).

4. Porte de véhicule conforme à l'une des revendications précédentes,
**caractérisée en ce que**
le système d'étanchéité (14) comporte, sur son bord externe supérieur (66) une lèvre d'étanchéité (59) permettant d'assurer l'étanchéité vis-à-vis de la carrosserie (2) ou d'une baguette latérale (60) du véhicule (1),
à l'opposé de celle-ci est formé un bord interne (67) avec la lèvre d'étanchéité (65) réalisée en une seule pièce avec le système d'étanchéité (14, 15),
une extrémité (68) de la lèvre d'étanchéité (65) réalisée en une seule pièce avec le système d'étanchéité (14, 15) s'applique en face de l'extrémité supérieure (26) du tronçon (24) d'un élément de guidage de fenêtre avant contre une zone de fixation (25) d'un rétroviseur d'une porte avant (6), et
l'autre extrémité (71a) de la lèvre d'étanchéité (65) réalisée en une seule pièce avec le système d'étanchéité (14, 15) est située à l'extrémité inférieure (34) du tronçon de cadre de fenêtre (21).

5. Porte de véhicule conforme à la revendication 4,
**caractérisée en ce que**
la lèvre d'étanchéité (65) réalisée en une seule pièce avec le système d'étanchéité (14, 15) s'étend en continu contre le bord interne (67) du système d'étanchéité (14, 15) de l'extrémité (68) de la lèvre d'étanchéité (65) réalisée en une seule pièce avec le système d'étanchéité (14, 15), sur le bord d'un tronçon d'étanchéité plan (70), qui recouvre une zone de coin (30) élargie de l'élément de fermeture (18) du cadre de fenêtre externe, jusqu'à l'autre extrémité (71a) de la lèvre d'étanchéité (65) réalisée en une seule pièce avec le système d'étanchéité (14, 15).

6. Porte de véhicule conforme à l'une des revendications précédentes,
**caractérisée en ce que**
la lèvre d'étanchéité (65) réalisée en une seule pièce avec le système d'étanchéité (14, 15) comporte en face de la zone de coin (30) de l'élément de fermeture (18) du cadre de fenêtre externe par son bord interne incurvé (36) également une extension incurvée, et
pour permettre son adaptation à l'extension de forme incurvée (36) de l'élément de fermeture (18) du cadre de fenêtre externe et au bord interne incurvé de la zone de coin (30) le système d'étanchéité (14) est équipé dans cette zone (69) d'un tronçon supplémentaire (70) essentiellement triangulaire en vue de dessus qui est intégré en une seule pièce au système d'étanchéité (14).

7. Porte de véhicule conforme à l'une des revendications 4 et 5,
**caractérisée en ce qu'**
l'extension du bord interne (67) du système d'étanchéité (14, 15) correspond à l'extension du bord interne (31) de l'élément de fermeture (18) du cadre de fenêtre.
